(19) Europäisches Patentamt
European Patent Office
Office européen des brevets

(11) EP 2 113 533 B1

(12) # EUROPEAN PATENT SPECIFICATION

(45) Date of publication and mention of the grant of the patent:
**04.07.2012 Bulletin 2012/27**

(21) Application number: **08710616.7**

(22) Date of filing: **29.01.2008**

(51) Int Cl.:
***C08L 69/00*** *(2006.01)* ***C08L 27/18*** *(2006.01)*
***C08L 83/10*** *(2006.01)*

(86) International application number:
**PCT/JP2008/051289**

(87) International publication number:
**WO 2008/102614 (28.08.2008 Gazette 2008/35)**

(54) **POLYCARBONATE RESIN COMPOSITION AND MOLDED BODY OBTAINED FROM THE SAME**

POLYCARBONATHARZZUSAMMENSETZUNG UND FORMKÖRPER DARAUS

COMPOSITION DE RÉSINE DE POLYCARBONATE ET CORPS MOULÉ OBTENU À PARTIR DE CETTE COMPOSITION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.02.2007 JP 2007043420**

(43) Date of publication of application:
**04.11.2009 Bulletin 2009/45**

(73) Proprietor: **Idemitsu Kosan Co., Ltd.**
**Chiyoda-ku**
**Tokyo 100-8321 (JP)**

(72) Inventor: **HAYATA, Yusuke**
**Ichihara-shi**
**Chiba 299-0193 (JP)**

(74) Representative: **Gille Hrabal**
**Patentanwälte**
**Brucknerstrasse 20**
**40593 Düsseldorf (DE)**

(56) References cited:
**EP-A2- 0 692 522**
**WO-A1-2005/085353**
**WO-A1-2007/072761**
**JP-A- 02 272 058**
**JP-A- 05 214 234**
**JP-A- 2006 232 956**
**JP-A- 2006 232 956**
**US-A1- 2007 179 233**
**US-B1- 6 727 312**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 113 533 B1

## Description

### Technical Field

The present invention relates to a polycarbonate resin composition excellent in flame retardance and a structure or sheet-like molded body such as a film or sheet composed of the composition, and more specifically, to a flame-retardant polycarbonate resin composition which: is excellent in flame retardance, mechanical characteristics, and thermal stability; and can be utilized in the fields of, for example, information and communication instruments, automobiles, architectures, and OA systems, and a structure or sheet-like molded body composed of the composition.

### Background Art

Although a polycarbonate-based resin has higher flame retardance than that of a polystyrene-based resin or the like, attempts have been made to improve the flame retardance of the polycarbonate-based resin by adding any one of the various flame retardants to the polycarbonate-based resin in order that the polycarbonate-based resin may be utilized in fields where additionally high flame retardance is requested typified by the fields of, for example, OA systems, and electrical and electronic parts.
For example, an organic halogen-based compound or organic phosphorus-based compound has been conventionally added. However, those flame retardants are troublesome in terms of toxicity, and in particular, the organic halogen-based compound involves the following problem: a corrosive gas is produced at the time of the combustion of the compound.
In view of the foregoing, there has been a growing request for the impartment of flame retardance with a non-bromine- or non-phosphorus-based flame retardant.
A method involving adding a silicone compound or a metal salt has been known as a method of imparting flame retardance to a polycarbonate with a non-bromine- or non-phosphorus-based flame retardant (see, for example, Patent Document 1).
However, the addition of any such flame retardant is apt to cause reductions in mechanical characteristics of the polycarbonate such as an impact strength or secondary agglomeration of the flame retardant, so the flame retardance, impact resistance, and the like of the polycarbonate may reduce.
Patent Document 1: JP 2005-263909 A

### Disclosure of the Invention

The present invention has been made under such circumstances, and an object of the present invention is to provide a polycarbonate resin composition excellent not only in flame retardance but also in mechanical characteristics and thermal stability even when formed into a thin member, and a structure or sheet-like molded body composed of the composition.
The inventors of the present invention have made extensive studies with a view to achieving the above object. As a result, the inventors have found that a flame-retardant polycarbonate resin composition having excellent characteristics can be obtained by blending a polytetrafluoroethylene into a resin mixture composed of a polycarbonate resin using dihydroxybiphenyls as part of the molecules of a divalent phenol as a raw material for the resin, a polycarbonate-polyorganosiloxane copolymer, and furthermore, a polycarbonate resin except the resin and the copolymer described above. Thus, the inventors have completed the present invention.
That is, the present invention is defined in claim 1.
The sheet-like molded body obtained by molding the polycarbonate resin composition according to claim 1, wherein the dihydroxybiphenyls account for 5 to 50 mol% of the divalent phenol as the raw material for the component (A-1);
The sheet-like molded body obtained by molding the polycarbonate resin composition according to the above-mentioned claim 1 or 2, wherein the component (A-2) contains a polyorganosiloxane segment at a content of 0.1 to 10 mass%;
The sheet-like molded body obtained by molding the polycarbonate resin composition according to any one of claims 1 to 3, containing 0.0001 to 2 parts by mass of a phosphorus-based antioxidant (C) with respect to 100 parts by mass of the component (A).
The polycarbonate resin composition of the present invention has achieved improved flame retardance and improved thermal resistance (resistance to thermal decomposition) by using the polycarbonate resin using dihydroxybiphenyls as part of the molecules of a divalent phenol as a raw material for the resin. In addition, the composition has achieved additionally improved thermal resistance, additionally improved flame retardance, and improved impact resistance by using the polycarbonate-polyorganosiloxane copolymer and the polytetrafluoroethylene.
In addition, the use of the polycarbonate-polyorganosiloxane copolymer can alleviate a reduction in dispersing performance of the phosphorus-based antioxidant.

Therefore, it has become possible to obtain a polycarbonate resin composition having the following characteristics, and a structure or sheet-like molded body such as a film or sheet composed of the composition: while excellent impact resistance of a polycarbonate resin is not reduced, the composition shows dramatically improved flame retardance, and is excellent in mechanical characteristics and thermal stability even when formed into a thin member.

Best Mode for carrying out the Invention

Hereinafter, the present invention is described in detail.
First, the polycarbonate resin (A-3) except the components (A-1) and (A-2) in the polycarbonate resin composition of the present invention is not particularly limited, and examples of the resin include various resins.
In ordinary cases, a polycarbonate resin produced by a reaction between a divalent phenol and a carbonate precursor can be used.
As a terminating agent, as required, a monohydric phenol compound may be used.
Further, a branching agent can be used.
A substance produced by a solution method (interface method) or a melting method of a dihydric phenol and a carbonate precursor, that is, the reaction of a dihydric phenol and phosgen, an ester exchange method of a dihydric phenol and diphenyl carbonate, and the like can be used.
Various compounds can be given as the dihydric phenol.
Here, as the dihydric phenol, bis(4-hydroxyphenyl)alkanes such as 1,1-bis(4-hydroxyphenyl)methane, 1,1-bis(4-hydroxyphenyl)ethane, 2,2-bis(4-hydroxyphenyl)propane [Bisphenol A], and 2,2-bis(4-hydroxy-3,5-dimethylphenyl)propane, bis(4-hydroxyphenyl)cycloalkanes, bis(4-hydroxyphenyl)oxides, bis(4-hydroxyphenyl)sulfides, bis(4-hydroxyphenyl)sulfones, bis(4-hydroxyphenyl)sulfoxides, and bis(4-hydroxyphenyl)ketones can be given.
Of those, bis(4-hydroxyphenyl)alkane-based phenol is preferred and bisphenol A is particularly preferred.
As a carbonate precursor, there are given carbonyl halide, carbonyl ester, or haloformate, and the like. Specifically, there are given phosgen, dihaloformate of a dihydric phenol, diphenyl carbonate, dimethyl carbonate, diethyl carbonate, and the like.
In addition, as a dihydric phenol, hydroquinone, resorcin, catechol, and the like are exemplified.
The dihydric phenol may be used singly, or two or more kinds of them may be used as a mixture.
Examples of the carbonate compounds include diarylcarbonates such as diphenylcarbonate and dialkylcarbonates such as dimethylcarbonate and diethylcarbonate.
As a terminating agent, a monohydric phenol compound represented by the general formula (1),
**[0013]**

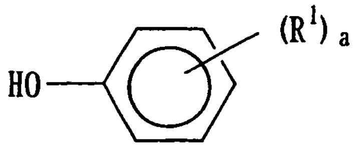

(1)

(in the formula, $R^1$ represents an alkyl group having 1 to 9 carbon atoms, an aryl group having 6 to 20 carbon atoms, or a halogen atom, and a represents an integer of 0 to 5) may be used and a para substituent thereof is preferred.
Specific examples thereof include phenol, p-cresol, p-tert-butylphenol, p-tert-octylphenol, p-cumylphenol, p-nonylphenol, and p-tert-amylphenol.
In addition, as a branching agent, compounds having 3 or more functional groups, such as 1,1,1-tris(4-hydroxyphenyl)ethane, α, α, α "-tris(4-hydroxyphenyl)-1,3,5-triisopropylbenzene, 1-[α -methyl-α-(4'-hydroxyphenyl)ethyl]-4-[α,α '-bis(4''-hydroxylphenyl)ethyl]benzene, phloroglucine, trimellitic acid, or isatinbis(o-cresol) can be employed.
Next, the polycarbonate resin (A-1) using dihydroxybiphenyls as part of the molecules of a divalent phenol as a raw material for the resin is obtained by changing part of the molecules of the divalent phenol as the raw material into the dihydroxybiphenyls at the time of polymerization for the above polycarbonate resin (A-3).
Examples of the dihydroxybiphenyls include compounds each represented by a general formula (2).
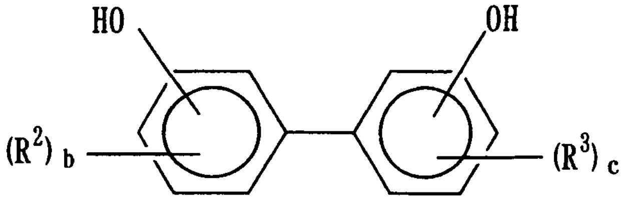

(2)

(In the formula, $R^2$ and $R^3$ each independently represent a group selected from a hydrogen atom, an alkyl group having 1 to 6 carbon atoms, a cycloalkyl group having 5 to 7 carbon atoms, a substituted or unsubstituted aryl group having 6 to 12 carbon atoms, and a halogen atom, and b and c each represent an integer of 1 to 4.)
Specific examples thereof include 4,4'-dihydroxybiphenyl, 3,3'-dimethyl-4,4'-dihydroxybiphenyl, 3,5,3',5'-tetramethyl-4,4'-dihydroxybiphenyl, 3,3'-diphenyl-4,4'-dihydroxybiphenyl, and 2,3,5,6,2',3',5', 6'-hexafluoro-4,4'-dihydroxybiphenyl. Those dihydroxybiphenyls, which are used in combination with the divalent phenol at the time of the polymerization for the polycarbonate resin (A-3), are used at a content of 5 to 50 mol%, preferably 5 to 30 mol%, or more preferably 10 to 20 mol% on the basis of the total amount of the divalent phenol.
When the content of the dihydroxybiphenyls is 5 mol% or more, the polycarbonate resin composition can obtain a sufficient flame-retarding effect; in addition, when the content is 50 mol% or less, the composition can obtain good impact resistance.

In addition, the polycarbonate-polyorganosiloxane copolymer (A-2) has a terminal group represented by a general formula (3).

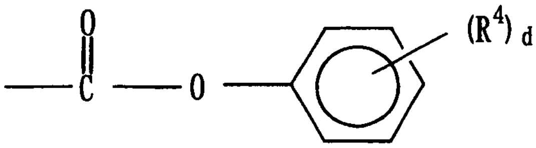

(3)

(In the formula, $R^4$ represents an alkyl group having 1 to 35 carbon atoms, and d represents an integer of 0 to 5). Examples of the copolymer include copolymers disclosed in Japanese Patent Application Laid-Open No. Sho 50-29695, Japanese Patent Application Laid-Open No. Hei 3-292359, Japanese Patent Application Laid-Open No. Hei 4-202465, Japanese Patent Application Laid-Open No. Hei 8-81620, Japanese Patent Application Laid-Open No. Hei 8-302178, and Japanese Patent Application Laid-Open No. Hei 10-7897. The alkyl group having 1 to 35 carbon atoms represented by $R^4$ may be linear or branched, and may be bonded to the benzene ring at any one of the p-, m-, and o-positions; the group is preferably bonded at the p-position.
The polycarbonate-polyorganosiloxane copolymer (A-2) is preferably, for example, a copolymer having a polycarbonate segment composed of a structural unit represented by a general formula (4) and a polyorganosiloxane segment composed of a structural unit represented by a general formula (5) in any one of its molecules.

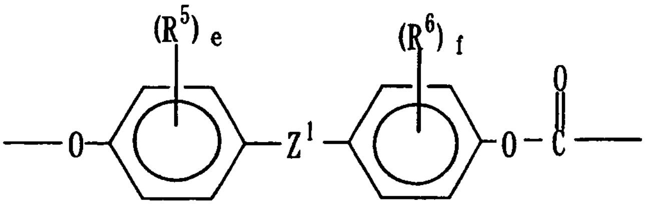

(4)

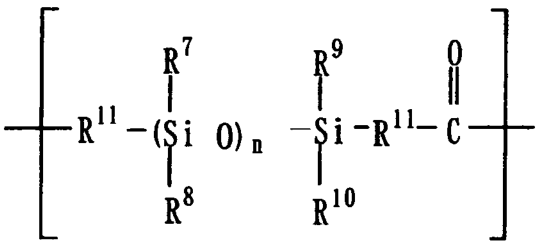

(5)

In the formulae:

$R^5$ and $R^6$ each represent an alkyl group having 1 to 6 carbon atoms or a phenyl group, and may be identical to or different from each other;
$R^7$ to $R^{10}$ each represent an alkyl group having 1 to 6 carbon atoms or a phenyl group, or each preferably represent a methyl group, and $R^7$ to $R^{10}$ may be identical to or different from one another;
$R^{11}$ represents a divalent organic residue containing an aliphatic or aromatic group, or preferably represents an o-allylphenol residue, a p-hydroxystyrene residue, or a eugenol residue;
$Z^1$ represents a single bond, an alkylene group having 1 to 20 carbon atoms, an alkylidene group having 2 to 20 carbon atoms, a cycloalkylene group having 5 to 20 carbon atoms, a cycloalkylidene group having 5 to 20 carbon atoms, or a $-SO_2-$, -SO-, -S-, -O-, or -CO- bond, or preferably represents an isopropylidene group;
e and f each represent an integer of 0 to 4, or each preferably represent 0; and
n represents an integer of 1 to 500, preferably 5 to 200, more preferably 15 to 150, or still more preferably 30 to 120.

The polycarbonate-polyorganosiloxane copolymer (A-2) can be produced by, for example, a method involving: dissolving a polycarbonate oligomer of which the polycarbonate segment is constituted and a polyorganosiloxane having a reactive group such as an o-allylphenol group, a p-hydroxystyrene group, or a eugenol residue at any one of its terminals (reactive PORS) of which the polyorganosiloxane segment is constituted produced in advance in a solvent such as methylene chloride, chlorobenzene, or chloroform; adding a caustic alkaline solution of a divalent phenol to the resultant solution; and subjecting the mixture to an interfacial polycondensation reaction with a tertiary amine (such as triethylamine) or a quaternary ammonium salt (such as trimethylbenzylammonium chloride) as a catalyst in the presence of a general terminating agent composed of a phenol compound represented by a general formula (6).
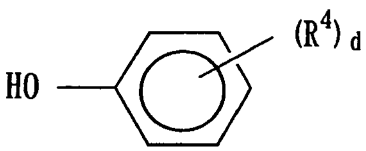

(6)

(In the formula, $R^4$ represents an alkyl group having 1 to 35 carbon atoms, and d represents an integer of 0 to 5.)
Examples of the phenol compound include phenol, p-cresol, p-tert-butylphenol, p-tert-octylphenol, p-cumylphenol, p-nonylphenol, docosylphenol, tetracosylphenol, hexacosylphenol, octacosylphenol, triacontylphenol, dotriacontylphenol, tetratriacontylphenol, and p-tert-pentylphenol.
Those phenols may be used alone or in mixture of two or more kinds.
In addition to those phenol compounds, another phenol compound or the like may also be used if required.
The above polyorganosiloxane segment is used at a content of typically 0.1 to 10 mass%, preferably 0.2 to 5 mass%, or more preferably 3 to 5 mass% with respect to the polycarbonate-polyorganosiloxane copolymer (A-2).
When the content of the polyorganosiloxane segment is 0.1 mass% or more, the flame retardance of the polycarbonate resin composition is improved. When the content is 10 mass% or less, a balance between the flame retardance and mechanical characteristics of the composition becomes excellent.
The polycarbonate oligomer used in the production of the polycarbonate-polyorganosiloxane copolymer (A-2) can be easily produced by, for example, causing a divalent phenol and a carbonate precursor such as phosgene or a carbonate compound to react with each other in a solvent such as methylene chloride.
Here, any one of the same compounds as the divalent phenols described for the above polycarbonate resin (A-3) can be used as the divalent phenol.

Of those, a bis(4-hydroxyphenyl)alkane-based compound, in particular, bisphenol A is preferable.
One kind of those divalent phenols may be used alone, or two or more kinds of them may be used in combination.
The above polycarbonate oligomer is produced by, for example, a reaction between a divalent phenol and a carbonate precursor such as phosgene or an ester exchange reaction between a divalent phenol and a carbonate precursor such as diphenyl carbonate in a solvent such as methylene chloride.

In addition, any one of the same compounds as the carbonate compounds described for the above polycarbonate resin (A-3) can be used as the carbonate compound.
The polycarbonate oligomer used in the production of the polycarbonate-polyorganosiloxane copolymer (A-2) may be a homopolymer using one kind of the above divalent phenols, or may be a copolymer using two or more kinds of them.
Further, the polycarbonate oligomer may be a thermoplastic, randomly branched polycarbonate obtained by using a branching agent and a divalent phenol in combination.
In this case, any one of the same compounds as the branching agents described for the polycarbonate resin (A-3) can be used as the branching agent.

The polycarbonate-polyorganosiloxane copolymer (A-2) can be produced in the aforementioned manner. However, a polycarbonate is generally by-produced. Thus, a polycarbonate containing the polycarbonate-polyorganosiloxane copolymer (A-2) is produced.
Note that the polycarbonate-polyorganosiloxane copolymer (A-2) produced by the aforementioned method virtually has, at one end or both ends of the molecule, an end group represented by the general formula (3).

The polycarbonate-polyorganosiloxane copolymer (A-2) is preferably a polycarbonate-polydimethylsiloxane copolymer in which the polyorganosiloxane is a polydimethylsiloxane, and the polydimethylsiloxane has a chain length (n) of 30 to 120.

The polycarbonate resin (A-1) using dihydroxybiphenyls as part of the molecules of a divalent phenol as a raw material for the resin in the polycarbonate resin composition of the present invention has a viscosity average molecular weight of typically 10,000 to 50,000, preferably 13,000 to 35,000, or more preferably 15,000 to 20,000.
In addition, the polycarbonate-polyorganosiloxane copolymer (A-2) has a viscosity average molecular weight of typically 10,000 to 50,000, preferably 13,000 to 35,000, or more preferably 15,000 to 20,000.
Further, the polycarbonate resin (A-3) except the components (A-1) and (A-2) has a viscosity average molecular weight of typically 10,000 to 50,000, preferably 13,000 to 35,000, or more preferably 15,000 to 25,000.

The content of the polycarbonate resin (A-1) in the resin mixture (A) of the present invention is 5 to 99 mass%, preferably 10 to 90 mass%, or more preferably 20 to 70 mass%.
When the content is 5 mass% or more, the polycarbonate resin composition exerts a good flame-retarding effect when formed into a thin member. When the content is 99 mass% or less, the composition shows improved moldability and an excellent balance between its flame retardance and mechanical characteristics.
In addition, the content of the polycarbonate-polyorganosiloxane copolymer (A-2) is 1 to 95 mass%, preferably 5 to 80 mass%, or more preferably 15 to 50 mass%.
When the content is 1 mass% or more, the flame retardance of the polycarbonate resin composition is improved. When the content is 95 mass% or less, the composition shows good moldability and an excellent balance between its flame retardance and mechanical characteristics.

The polytetrafluoroethylene (B) in the polycarbonate resin composition of the present invention, which is not particularly limited, is preferably a polytetrafluoroethylene having a fibril-forming ability.
The term "fibril-forming ability" refers to a state where the molecules of a resin show the following tendency: the molecules are bonded to each other by an external action such as a shear force so as to be fibrous.
The polytetrafluoroethylene having a fibril-forming ability imparts a molten drip-preventing effect to the polycarbonate resin composition of the present invention, and additionally improves the flame retardance of the composition.
Specific examples of the polytetrafluoroethylene (B) include a polytetrafluoroethylene and a tetrafluoroethylene-based copolymer (such as a tetrafluoroethylene/hexafluoropropylene copolymer).
Of those, the polytetrafluoroethylene is preferable.

The polytetrafluoroethylene having a fibril-forming ability has an extremely high molecular weight, and its number average molecular weight determined from its standard specific gravity is typically 500,000 or more, preferably 500,000 to 1,500,000, or more preferably 1,000,000 to 10,000,000.
The polytetrafluoroethylene can be obtained by, for example, polymerizing tetrafluoroethylene in an aqueous solvent in the presence of sodium peroxydisulfide, potassium peroxydisulfide, or ammonium peroxydisulfide under a pressure of about 1 to 100 psi (6. 895 to 689. 5 kPa) at a temperature of about 0 to 200°C, orpreferably 20 to 100°C.
The polytetrafluoroethylene can be used in the form of an aqueous dispersion liquid as well as a solid.

For example, commercially available products classified into Type 3 by the ASTM standard can each be used as the polytetrafluoroethylene having a fibril-forming ability.
Examples of the commercially available products classified into Type 3 include a Teflon 6-J (trade name, manufactured by DU PONT-MITSUI FLUOROCHEMICALS COMPANY, LTD.), a POLYFLON D-1 and a POLYFLON F-103 (trade

names, manufactured by DAIKIN INDUSTRIES, ltd.), and a CD-076 (trade name, manufactured by ASAHI GLASS CO., LTD.).

In addition, commercially available products except the commercially available products classified into Type 3 include an Algoflon F5 (trade name, manufactured by Montefluos) and a POLYFLON MPA FA-100 (trade name, manufactured by DAIKIN INDUSTRIES, ltd.).

One kind of the above components (B) may be used alone, or two or more kinds of them may be used in combination.

The loading of the polytetrafluoroethylene (B) in the polycarbonate resin composition of the present invention is 0.05 to 2 parts by mass, preferably 0.1 to 1 part by mass, ormore preferably 0.2 to 0.2 part by mass with respect to 100 parts by mass of the resin mixture (A).

Setting the loading of the component (B) within the above range additionally improves the flame retardance and thermal stability of the composition.

That is, when the loading is 0.05 part by mass or more, the polycarbonate resin composition can obtain a sufficient molten drip-preventing effect. When the loading is 2 parts by mass or less, the impact resistance and moldability (external appearance of a molded article) of the polycarbonate resin composition are good. In addition, the ejection of a strand does not pulsate at the time of the kneading extrusion of the composition, so pellets can be stably produced. In addition, the flame retardance and thermal stability of the composition are improved.

The phosphorus-based antioxidant (C) can be further blended into the polycarbonate resin composition of the present invention.

A phosphite or a phosphate can be suitably used as the phosphorus-based antioxidant (C), and one kind of them may be used alone, or two or more kinds of them may be used as a mixture.

The phosphite is a compound represented by a general formula (7).

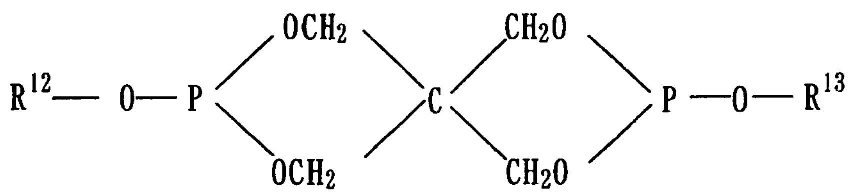

(7)

(In the formula, $R^{12}$ and $R^{13}$ each represent hydrogen, an alkyl group, a cycloalkyl group, or an aryl group, and each of the cycloalkyl group and the aryl group may be substituted with an alkyl group.)

Specific examples of the phosphite include a compound represented by a formula (8) [ADEKASTAB PEP-36: manufactured by Asahi Denka Co., Ltd.], and compounds represented by formulae (9) to (12).

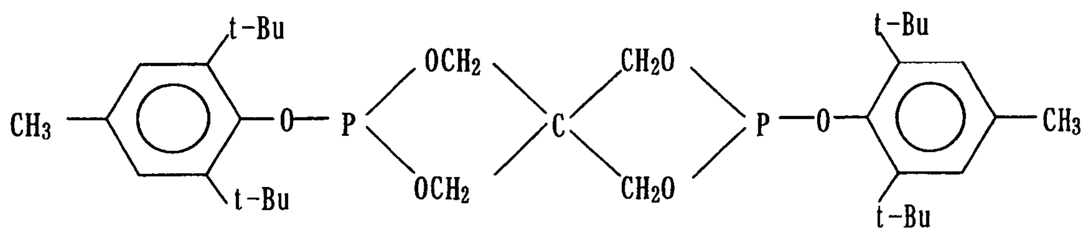

(8)

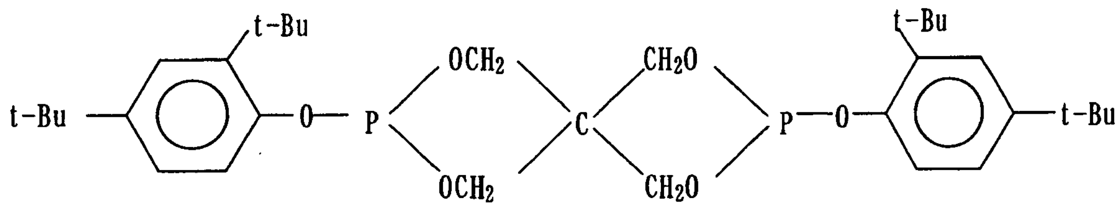

(9)

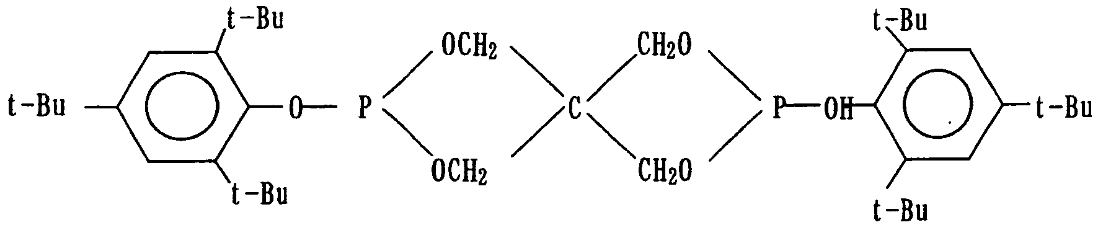 (10)

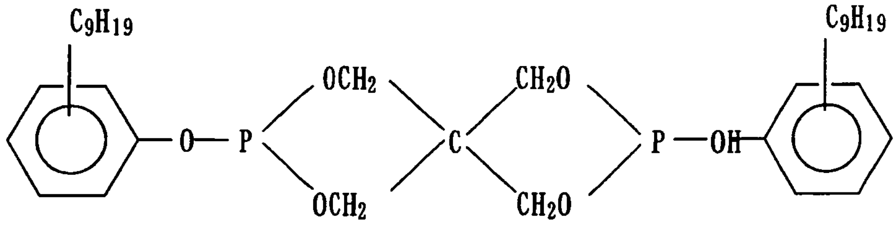 (11)

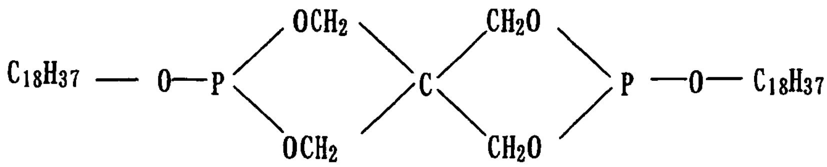 (12)

Further, examples of phosphite-based compounds other than the above phosphite-based compounds include tri(2,4-di-t-butylphenyl)phosphite, trinonylphenyl phosphite, triphenyl phosphite, tridecylphosphite, and trioctadecyl phosphite.
As a phosphite, a phosphite containing a pentaerythritol structure or an alkyl ester structure is preferred.
The phosphate is, for example, a compound represented by a general formula (13).
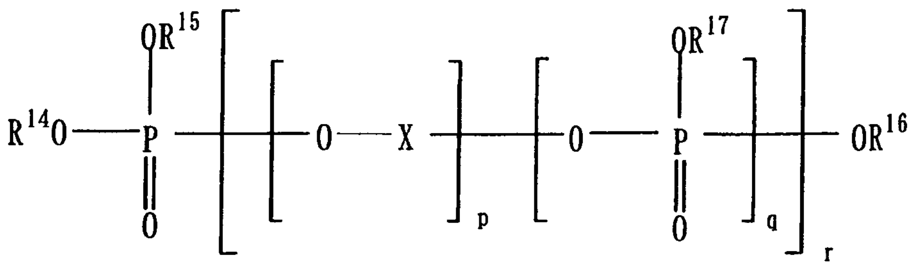 (13)

(In the formula, $R^{14}$, $R^{15}$, $R^{16}$, and $R^{17}$ each independently represent a hydrogen atom or an organic group, X represents an organic group which is divalent or more, p represents 0 or 1, q represents an integer of 1 or more, and r represents an integer of 0 or more.)
In the general formula (13), the organic group is, for example, a substituted or unsubstituted alkyl group, a substituted or unsubstituted cycloalkyl group, or a substituted or unsubstituted aryl group.
A substituent when the organic group is substituted is, for example, an alkyl group, an alkoxy group, an aryl group, an aryloxy group, or an arylthio group.
Further, the substituent may be, for example, an arylalkoxyalkyl group as a group obtained by combining two or more of those substituents, or an arylsulfonylaryl group obtained by combining two or more of those substituents through a bond with, for example, an oxygen atom, a nitrogen atom, or a sulfur atom.
In addition, the organic group X which is divalent or more in the general formula (13) means a group which is

divalent or more obtained by removing one or more hydrogen atoms bonded to carbon atoms from any one of the above organic groups.
The organic group X is derived from, for example, an alkylene group, a (substituted) phenylene group, or any one of the bisphenols as polynuclear phenols.
Preferred examples of the organic group X include bisphenol A, hydroquinone, resorcinol, dihydroxydiphenyl, and dihydroxy naphthalene.

The phosphate may be a monomer, an oligomer, a polymer, or a mixture thereof.
Specific examples thereof include trimethyl phosphate, triethyl phosphate, tributyl phosphate, trioctyl phosphate, tributoxyethyl phosphate, triphenyl phosphate, tricresyl phosphate, cresyldiphenyl phosphate, octyldiphenyl phosphate, tri (2-ethylhexyl)phosphate, diisopropylphenyl phosphate, trixylenyl phosphate, tris(isopropylphenyl)phosphate, tributyl phosphate, bisphenol A bisphosphate, hydroquinone bisphosphate, resorcine bisphosphate, resorcinol-diphenyl phosphate, trioxybenzene triphosphate, and cresyldiphenyl phosphate.
As the phosphate, phosphoric monoalkyl dialkyl esters are preferred.

As a commercially available halogen-free phosphate compound which can be used suitably, AX-71 [mono/di alkoxy-type phosphate] manufactured by ADEKA CORPORATION, TPP [triphenyl phosphate], TXP [trixylenyl phosphate], PFR [resorcinol(diphenyl phosphate], PX200 [1,3-phenylene-tetrakis(2,6-dimethylphenyl)phosphate], PX201 [1,4-phenylene-tetrakis(2,6-dimethylphenyl)phosphate], PX202 [4,4'-biphenylene-tetrakis(2,6-dimethylphenyl)phosphate], all of which are manufactured by DAIHACHI CHEMICAL INDUSTRY CO. , LTD, and the like are exemplified.

The loading of the phosphorus-based antioxidant (C) in the polycarbonate resin composition of the present invention is typically 0.0001 to 2 parts by mass, preferably 0.001 to 1 part by mass, or more preferably 0.01 to 0.3 part by mass with respect to 100 parts by mass of the resin mixture (A).
When the loading falls within the above range, the thermal stability of the composition is improved even at high temperatures needed at the time of the molding of a thin member out of the composition.

An additive component that has been regularly used in a thermoplastic resin can be blended into the polycarbonate resin composition of the present invention together with the above components as required.
Examples of the additive component include an inorganic fillers and a silicone-based compound.
The loading of the additive component is not particularly limited as long as the loading falls within such a range that the characteristics of the polycarbonate resin composition of the present invention are maintained.

Next, a method of producing the polycarbonate resin composition of the present invention is described.
The polycarbonate resin composition of the present invention can be obtained by: blending the components (A-1) and (A-2) described above, and as required, the component (A-3), and the component (B), and furthermore, as required, the component (C) byanordinarymethod; further blending any other additive component into the mixture by an ordinary method; and melt-kneading the mixture.
Blending and melt-kneading are performed, for example, by a method using a generally-used device such as a ribbon blender, a Henschel mixer, a Banbury mixer, a drum tumbler, a single-screw extruder, a twin-screw extruder, a cokneader, or a multi-screw extruder.
Heating temperature inmelt-kneading is generally in the range of 250 to 300°C, and preferably in the range of 260 to 280°C.

The polycarbonate resin composition of the present invention can be formed into a structure or a sheet-like molded body such as a film or sheet by employing any known molding method such as hollow molding, injection molding, extrusion molding, vacuum molding, heat bending molding, pressure molding, calendar molding, or rotational molding using the above melt-kneaded product or the obtained pellet as a raw material.
The present invention provides a structure and a sheet-like molded body such as a film or sheet each obtained by molding the above polycarbonate resin composition of the present invention as well.

## Examples

Hereinafter the present invention is described in more detail by way of examples, but the present invention is not limited thereto.
Performance evaluation was performed in accordance with the following measurement methods.

### (1) and (2) Flame retardance

A vertical flame test was performed by using test pieces each having a thickness of 1/32 inch or 1/64 inch (0.4 mm) produced in accordance with the UL standard 94.
The test pieces were classified into levels UL94 V-0, V-1, and V-2out (not-V) on the basis of the results of the test.

(3) IZOD impact strength

The IZOD impact strength of a test piece having a thickness of 3.2 mm (1/8 inch) produced with an injection molding machine was measured in conformity with the ASTM standard D-256.

(4) Thermal stability

After a polycarbonate resin composition had been caused to reside in a molding machine at 320°C for 20 minutes, a cornered plate measuring 80 mm by 40 mm by 3 mm was molded out of the composition. A polycarbonate pellet before the molding and the polycarbonate molded article after the molding were each dissolved in dichloromethane. Insoluble matter was filtrated, and a polymer was recovered from the filtrate. Then, the viscosity average molecular weight (Mv) of the polymer was measured.
The viscosity average molecular weight (Mv) is calculated from the following equation by using a limiting viscosity [η ] determined from the viscosity of a methylene chloride solution of the polymer at 20°C measured with a Ubbelohde viscometer.

$$[\eta]=1.23\times10^{-5}Mv^{0.83}$$

Production Example 1 [production of polycarbonate-dihydroxybiphenyl copolymer (A-1)]

(1) Production of polycarbonate oligomer

Sodium dithionite was added at a content of 0.2 mass% with respect to biphenol A (BPA) to be dissolved later to an aqueous sodium hydroxide having a concentration of 5.6 mass%. BPA was dissolved in the mixture so that a BPA concentration might be 13.5 mass%, whereby a sodium hydroxide solution of BPA was prepared.
A tubular reactor having an inner diameter of 6 mm and a tube length of 30 m was continuously supplied with the above sodium hydroxide solution of BPA and methylene chloride at flow rates of 40 L/hr and 15 L/hr, respectively. At the same time, the reactor was continuously supplied with phosgene at a flow rate of 4. 0 kg/hr.
The tubular reactor had a jacket portion, and the temperature of a reaction liquid was kept at 40°C or lower by passing cooling water through the jacket.
The reaction liquid delivered from the tubular reactor was continuously introduced into a baffled vessel type reactor provided with a sweep-back wing and having an internal volume of 40 L. Further, the reactor was supplied with the sodium hydroxide solution of BPA, a 25-mass% aqueous sodium hydroxide, water, and a 1-mass% aqueous solution of triethylamine at flow rates of 2.8 L/hr, 0.07 L/hr, 17 L/hr, and 0.64 L/hr, respectively, and the mixture was subjected to a reaction at 29 to 32°C.
The reaction liquid was continuously extracted from the vessel type reactor, and was then left at rest so that an aqueous phase might be separated and removed. Then, a methylene chloride phase was collected.
A polycarbonate oligomer solution thus obtained had an oligomer concentration of 338 g/L and a chloroformate group concentration of 0.71 mol/L.

(2) Production of polycarbonate-dihydroxybiphenyl copolymer

First, 15.0 L of the above oligomer solution, 10.5 Lof methylene chloride, 132.7 g of p-tert-butylphenol, and 1.4 mL of triethylamine were loaded into a vessel type reactor provided with a baffle board and a paddle stirring blade and having an internal volume of 50 L. A sodium hydroxide solution of a dihydroxybiphenyl (prepared by dissolving 890 g of 4,4' -dihydroxybiphenyl in an aqueous solution prepared by dissolving 640 g of sodium hydroxide and 1.8 g of sodium dithionite $Na_2S_2O_4$ in 9.3 L of water) was added to the mixture, and the whole was subjected to a polymerization reaction for 1 hour.
After 10.0 L of methylene chloride had been added for diluting the resultant, the mixture was left at rest, whereby the mixture was separated into an organic phase containing a polycarbonate and an aqueous phase containing excessive amounts of 4,4'-dihydroxybiphenyl and sodium hydroxide. Then, the organic phase was isolated.
A solution of a polycarbonate-dihydroxybiphenyl copolymer in methylene chloride obtained in the above second paragraph was sequentially washed with a 0.03-mol/L aqueous sodium hydroxide and a 0.2-mol/L hydrochloric acid at contents of 15 vol% each with respect to the solution. Next, the resultant was repeatedly washed with pure water until an electric conductivity in the aqueous phase after the washing became 0.05 μS/m or less.
A solution of the polycarbonate-dihydroxybiphenyl copolymer in methylene chloride obtained in the above third paragraph

was concentrated and pulverized, whereby flakes of the polycarbonate-dihydroxybiphenyl copolymer were obtained. The resultant flakes were dried under reduced pressure at 120°C for 12 hours.
The copolymer had a viscosity average molecular weight (Mv) of 17, 500 and a dihydroxybiphenyl content measured by $^1$H-NMR of 15.9 mol%.

Production Example 2 [production of polycarbonate-polydimethylsiloxane copolymer (A-2)]

(1) Production of polycarbonate oligomer

A sodium hydroxide solution of bisphenol A (BPA) was prepared by dissolving 60 kg of BPA in 400 L of a 5-mass% aqueous sodium hydroxide.
Next, the sodium hydroxide solution of BPA kept at room temperature and methylene chloride were introduced at flow rates of 138 L/hr and 69 L/hr, respectively into a tubular reactor having an inner diameter of 10 mm and a tube length of 10 m through an orifice plate. In parallel with them, phosgene was blown into the reactor at a flow rate of 10.7 kg/hr, and the mixture was continuously subjected to a reaction for 3 hours.
The tubular reactor used here was of a double tube type, and the temperature of a reaction liquid at the time of discharge was kept at 25°C by passing cooling water through the jacket portion of the tubular reactor.
In addition, the pH of the discharged liquid was adjusted to 10 to 11.
The reaction liquid thus obtained was left at rest so that an aqueous phase might be separated and removed. Then, a methylene chloride phase (220 L) was collected, whereby a polycarbonate oligomer (having a concentration of 317 g/L) was obtained.
The polycarbonate oligomer obtained here had a degree of polymerization of 2 to 4 and a chloroformate group concentration of 0.7 N (0.7 mol/L).

(2) Production of reactive polydimethylsiloxane

First, 1,483 g of octamethylcyclotetrasiloxane, 96 g of 1,1,3,3-tetramethyldisiloxane, and 35 g of an 86-mass% sulfuric acid were mixed, and then the mixture was stirred at room temperature for 17 hours.
After that, an oil phase was separated, and 25 g of sodium hydrogen carbonate were added to the phase. Then, the mixture was stirred for 1 hour.
After the mixture had been filtrated, the filtrate was subjected to vacuum distillation at 150°C and 3 torr ($4\times10^2$ Pa), and a low-boiling substance was removed, whereby oil was obtained.
Then, 294 g of the oil obtained in the foregoing were added at a temperature of 90°C to the mixture of 60 g of 2-allylphenol and 0.0014 g of platinum in the form of a platinum chloride-alcoholate complex.
The mixture was stirred for 3 hours while its temperature was kept at 90 to 115°C.
The product was extracted with methylene chloride, and was washed with an 80-mass% aqueous methanol three times so that excess 2-allylphenol might be removed.
The product was dried with anhydrous sodium sulfate, and was then heated to 115°C in a vacuum so that the solvent might be removed by distillation.
The number of repetitions of dimethylsilanoxy units of the resultant terminal phenol polydimethylsiloxane measured by $^1$H-NMR was 30.

(3) Production of polycarbonate-polydimethylsiloxane copolymer

First, 182 g of the reactive polydimethylsiloxane obtained in the above section (2) were dissolved in 2 L of methylene chloride, and then 10 L of the polycarbonate oligomer obtained in the above section (1) were mixed into the solution.
A solution prepared by dissolving 26 g of sodium hydroxide in 1 L of water and 5.7 $cm^3$ of triethylamine were added to the mixture, and the whole was subjected to a reaction by being stirred at 500 rpm and room temperature for 1 hour.
After the completion of the reaction, a solution prepared by dissolving 600 g of bisphenol A in 5 L of a 5.2-mass% aqueous sodium hydroxide, 8 L of methylene chloride, and 96 g of p-tert-butylphenol were added to the above reaction system, and the whole was subjected to a reaction by being stirred at 500 rpm and room temperature for 2 hours.
After the reaction, 5 L of methylene chloride were added to the resultant, and the mixture was subjected to the following steps sequentially: the mixture was washed with 5 L of water, subjected to alkali washing with 5 L of a 0.03-N (0.03-mol/L) aqueous sodium hydroxide, and subjected to acid washing with 5 L of a 0.2-N (0.2-mol/L) hydrochloric acid, and was then washed with 5 L of water twice. Finally, methylene chloride was removed, whereby a flaky polycarbonate-polydimethylsiloxane copolymer was obtained.
The resultant polycarbonate-polydimethylsiloxane copolymer was dried in a vacuum at 120°C for 24 hours.

The copolymer had a viscosity average molecular weight (Mv) of 17,000 and a polydimethylsiloxane segment content of 4.0 mass%.
It should be noted that the polydimethylsiloxane segment content was determined by the following procedure.
The content was determined on the basis of an intensity ratio between the peak of a methyl group of the isopropyl group of bisphenol A observed at 1.7 ppm in $^1$H-NMR and the peak of a methyl group of dimethylsiloxane observed at 0.2 ppm in $^1$H-NMR.

Examples 1 to 11 and Comparative Examples 1 to 9

The respective polycarbonate resins [the components (A-1), (A-2), and (A-3)] described in Tables 1 and 2 were each dried. After that, the components (B) and (C) were uniformly blended with a tumbler at blending ratios shown in Tables 1 and 2 with respect to 100 parts by mass of the component (A). After that, the mixture was supplied to a biaxial extruder with a vent having a diameter of 35 mm (manufactured by TOSHIBA MACHINE CO., LTD., device name: TEM 35), and was kneaded and pelletized at a temperature of 260°C.
The resultant pellet was dried at 100°C for 10 hours. After that, the pellet was subjected to injection molding with an injection molding machine at a cylinder temperature of 240°C and a die temperature of 80°C, whereby a desired test piece was obtained.
Tables 1 and 2 show the results of the performance evaluation of the test piece.
Materials used in the components (A) to (C) in Tables 1 and 2 are as described below.

(A-1): The polycarbonate-dihydroxybiphenyl copolymer having a viscosity average molecular weight of 17,500 and a dihydroxybiphenyl content of 15.9 mol% (obtained in Production Example 1)
(A-2): The polycarbonate-polydimethylsiloxane copolymer having a viscosity average molecular weight (Mv) of 17,000 and a polydimethylsiloxane segment content of 4.0 mass%
(A-3): A bisphenol A polycarbonate having a viscosity average molecular weight (Mv) of 19,000 manufactured by Idemitsu Kosan Company, Limited; A1900
(B) : A polytetrafluoroethylene (PTFE) having a fibril-forming ability manufactured by ASAHI GLASS CO., LTD.; CD-076
(C): A phosphorus-based antioxidant manufactured by Asahi Denka Co., Ltd.; PEP-36

Table 1-1

| | | | | Example | | | | | |
|---|---|---|---|---|---|---|---|---|---|
| | | | | 1 | 2 | 3 | 4 | 5 | 6 |
| Blending ratio | (A) | (A-1) | (part(s) by mass) | 10 | 10 | 30 | 30 | 50 | 50 |
| | | (A-2) | (part(s) by mass) | 30 | 90 | 20 | 70 | 15 | 50 |
| | | (A-3) | (part(s) by mass) | 60 | 0 | 50 | 0 | 35 | 0 |
| | (B) | Polytetrafluoroethylene (part (s) by mass) | | 0.4 | 0.4 | 0.3 | 0.3 | 0.5 | 0.3 |
| | (c) | Phosphorus-based antioxidant (part(s) by mass) | | 0.05 | 0.05 | 0.1 | 0.1 | 0.1 | 0.05 |

(continued)

| | | | Example | | | | | |
|---|---|---|---|---|---|---|---|---|
| | | | 1 | 2 | 3 | 4 | 5 | 6 |
| Evaluation | (1) | Flame retardance (1/32 inch) | | | | | | |
| | | Judgement | V-0 | V-0 | V-0 | V-0 | V-0 | V-0 |
| | | Total combustion time (seconds) | 16 | 15 | 20 | 15 | 20 | 15 |
| | (2) | Flame retardance (1/64 inch) | | | | | | |
| | | Judgement | V-0 | V-0 | V-0 | V-0 | V-0 | V-0 |
| | | Total combustion time (seconds) | 21 | 20 | 24 | 22 | 28 | 20 |
| | (3) | IZOD impact strength (1/8 inch) | 75 | 85 | 70 | 80 | 66 | 78 |
| | (4) | Thermal stability (Mv) | | | | | | |
| | | Before molding | 18,500 | 17,200 | 18,800 | 17,700 | 18,800 | 17,900 |
| | | After molding | 18,400 | 17,200 | 18,800 | 17,600 | 18,800 | 17,800 |

Table 1-2

| | | | | Example | | | | |
|---|---|---|---|---|---|---|---|---|
| | | | | 7 | 8 | 9 | 10 | 11 |
| Blending ratio | (A) | (A-1) | (part(s) by mass) | 70 | 70 | 90 | 90 | 70 |
| | | (A-2) | (part (s) by mass) | 20 | 30 | 5 | 10 | 30 |
| | | (A-3) | (part(s) by mass) | 10 | 0 | 5 | 0 | |
| | (B) | Polytetrafluoroethylene (part(s) by mass) | | 0.3 | 0.3 | 0.4 | 0.4 | 0.3 |
| | (C | Phosphorus-based antioxidant (part(s) by mass) | | 0.05 | 0.05 | 0.1 | 0.1 | 0 |
| Evaluation | (1) | Flame retardance (1/32 inch) | | | | | | |
| | | Judgement | | V-0 | V-0 | V-0 | V-0 | V-0 |
| | | Total combustion time (seconds) | | 18 | 15 | 25 | 20 | 25 |
| | (2) | Flame retardance (1/64 inch) | | | | | | |
| | | Judgement | | V-0 | V-0 | V-0 | V-0 | V-0 |
| | | Total combustion time (seconds) | | 26 | 20 | 30 | 26 | 32 |
| | (3) | IZOD impact strength (1/8 inch) | | 65 | 70 | 65 | 65 | 60 |
| | (4) | Thermal stability (Mv) | | | | | | |
| | | Before molding | | 18,500 | 18,500 | 18,700 | 18,900 | 18,500 |
| | | After molding | | 18,500 | 18,400 | 18,700 | 18,900 | 17,700 |

Table 2-1

| | | | | Comparative Example | | | | |
|---|---|---|---|---|---|---|---|---|
| | | | | 1 | 2 | 3 | 4 | 5 |
| Blending ratio | (A) | (A-1) | (part(s) by mass) | 0 | 0 | 2 | 100 | 30 |
| | | (A-2) | (part(s) by mass) | 0 | 30 | 30 | 0 | 0 |
| | | (A-3) | (part(s) by mass) | 100 | 70 | 68 | 0 | 70 |
| | (B) | Polytetrafluoroethylene (part(s) by mass) | | 0.4 | 0.4 | 0.4 | 0.4 | 0.3 |
| | (C) | Phosphorus-based antioxidant (part(s) by mass) | | 0.05 | 0.05 | 0.05 | 0.05 | 0.1 |
| Evaluation | (1) | Flame retardance (1/32 inch) | | | | | | |
| | | Judgement | | V-2 | V-1 | V-1 | V-2 | V-1 |
| | | Total combustion time (seconds) | | 100 | 80 | 65 | 90 | 60 |
| | (2) | Flame retardance (1/64 inch) | | | | | | |
| | | Judgement | | V-2 | V-1 | V-1 | V-2 | V-2 |
| | | Total combustion time (seconds) | | 100 | 100 | 80 | 110 | 75 |
| | (3) | IZOD impact strength (1/8 inch) | | 75 | 80 | 75 | 65 | 70 |
| | (4) | Thermal stability (Mv) | | | | | | |
| | | Before molding | | 19,000 | 18,500 | 18,500 | 18,800 | 18,900 |
| | | After molding | | 18,900 | 18,400 | 18,500 | 18,500 | 18,800 |

Table 2-2

| | | | | Comparative Example | | | |
|---|---|---|---|---|---|---|---|
| | | | | 6 | 7 | 8 | 9 |
| Blending ratio | (A) | (A-1) | (part(s) by mass) | 70 | 70 | 30 | 70 |
| | | (A-2) | (part(s) by mass) | 0 | 30 | 20 | 20 |
| | | (A-3) | (part (s) by mass) | 30 | 0 | 50 | 10 |
| | (B) | Polytetrafluoroethylene (part (s) by mass) | | 0.3 | 0 | 0 | 0 |
| | (C) | Phosphorus-based antioxidant (part(s) by mass) | | 0.05 | 0 | 0.1 | 0.05 |
| Evaluation | (1) | Flame retardance (1/32 inch) | | | | | |
| | | Judgement | | V-1 | V-2 | V-2 | V-2 |
| | | Total combustion time (seconds) | | 60 | 90 | 50 | 45 |
| | (2) | Flame retardance (1/64 inch) | | | | | |
| | | Judgement | | V-1 | V-2 | V-2 | V-2 |
| | | Total combustion time (seconds) | | 70 | 100 | 66 | 60 |
| | (3) | IZOD impact strength (1/8 inch) | | 65 | 60 | 65 | 60 |
| | (4) | Thermal stability (Mv) | | | | | |
| | | Before molding | | 18,800 | 18,500 | 18,600 | 18,700 |
| | | After molding | | 18,800 | 17,600 | 18,600 | 18,700 |

Tables 1 and 2 show the following:

(1) as is apparent from Examples 1 to 11, the polycarbonate resin composition of the present invention composed of the polycarbonate resin (A-1) and polycarbonate-polyorganosiloxane copolymer (A-2) of the present invention, and furthermore, the polycarbonate resin (A-3) is a material excellent in flame retardance, impact strength, and thermal stability;
(2) the polycarbonate resin compositions of Comparative Examples 1 to 6 each have flame retardance lowered to the level V-1 or V-2 because the content of the polycarbonate resin (A-1) or the polycarbonate-polyorganosiloxane copolymer (A-2) deviates from the range of the present invention; and
(3) the polycarbonate resin compositions of Comparative Examples 7 to 9 each have flame retardance lowered to the level V-2 because the polytetrafluoroethylene (B) is not added and hence each of the compositions drips during its combustion.

Industrial Applicability

The present invention enables to obtain a polycarbonate resin composition having the following characteristics, and a structure or sheet-like molded body such as a film or sheet composed of the composition: while excellent impact resistance of a polycarbonate resin is not reduced, the composition shows dramatically improved flame retardance, and is excellent in mechanical characteristics and thermal stability even when formed into a thin member.
Therefore, the polycarbonate resin composition of the present invention is widely used in the fields of, for example, information and communication instruments, automobiles, architectures, and OA systems.

## Claims

1. A sheet-like molded body obtained by molding a polycarbonate resin composition consisting of 0.05 to 2 parts by mass of a polytetrafluoroethylene (B) with respect to 100 parts by mass of a resin mixture (A) composed of 5 to 99 mass% of a polycarbonate resin (A-1) using dihydroxybiphenyls as part of molecules of a divalent phenol as a raw material for the resin, 1 to 95 mass% of a polycarbonate-polyorganosiloxane copolymer (A-2), and 0 to 94 mass% of a polycarbonate resin (A-3) except the components (A-1) and (A-2), and
optionally one or more components from the group consisting of phosphorus-based antioxidants, inorganic fillers and silicon-based compounds.

2. The sheet-like molded body obtained by molding the polycarbonate resin composition according to Claim 1, wherein the dihydroxybiphenyls account for 5 to 50 mol% of the divalent phenol as the raw material for the component (A-1).

3. The sheet-like molded body obtained by molding the polycarbonate resin composition according to Claim 1 or 2, wherein the component (A-2) contains a polyorganosiloxane segment at a content of 0.1 to 10 mass%.

4. The sheet-like molded body obtained by molding the polycarbonate resin composition according to any one of Claims 1 to 3, containing 0.0001 to 2 parts by mass of a phosphorus-based antioxidant (C) with respect to 100 parts by mass of the component (A).

## Patentansprüche

1. Bogenartig geformter Körper, erhalten durch Formen einer Polycarbonatharzzusammensetzung, bestehend aus 0,05 bis 2 Massenteilen eines Polytetrafluorethylens (B), bezogen auf 100 Massenteile einer Harzmischung (A), zusammengesetzt aus 5 bis 99 Massenprozent eines Polycarbonatharzes (A-1) unter Verwendung von Dihydroxybiphenylen als Teil von Molekülen eines zweiwertigen Phenols als Rohmaterial für das Harz, 1 bis 95 Massenprozent eines Polycarbonat-Polyorganosiloxan-Copolymers (A-2), und 0 bis 94 Massenprozent eines Polycarbonatharzes (A-3), ausgenommen die Komponenten (A-1) und (A-2), und gegebenenfalls eine oder mehrere Komponenten aus der Gruppe aus Phosphor-basierten Antioxidantien, anorganischen Füllstoffen und Silizium-basierten Verbindungen.

2. Bogenartig geformter Körper, erhalten durch Formen der Polycarbonatharzzusammensetzung gemäß Anspruch 1, worin die Dihydroxybiphenyle auf 5 bis 50 mol% des zweiwertigen Phenols als Rohmaterial für die Komponente (A-1) entfallen.

3. Bogenartig geformter Körper, erhalten durch Formen der Polycarbonatharzzusammensetzung gemäß Anspruch 1

oder 2, worin die Komponente (A-2) ein Polyorganosiloxan-Segment zu einem Gehalt von 0, 1 bis 10 Massenprozent enthält.

**4.** Bogenartig geformter Körper, erhalten durch Formen der Polycarbonatharzzusammensetzung gemäß einem der Ansprüche 1 bis 3, enthaltend 0,0001 bis 2 Massenanteile eines Phosphor-basierten Antioxidants (C), bezogen auf 100 Massenanteile der Komponente (A).

## Revendications

**1.** Corps moulé en feuille obtenu par moulage d'une composition de résine de polycarbonate consistant en 0,05 à 2 parties en masse d'un polytétrafluoroéthylène (B) par rapport à 100 parties en masse d'un mélange de résine (A) constitué de 5 à 99 % en masse d'une résine de polycarbonate (A-1) utilisant des dihydroxybiphényles comme parties des molécules d'un phénol divalent comme matière première de la résine, 1 à 95 % en masse d'un copolymère de polycarbonate-polyorganosiloxane (A-2) et 0 à 94 % en masse d'une résine de polycarbonate (A-3) excepté des composants (A-1) et (A-2) et
facultativement un ou plusieurs composants du groupe consistant en des antioxydants à base de phosphore, des charges inorganiques et des composés à base de silicium.

**2.** Corps moulé en feuille obtenu par moulage de la composition de résine de polycarbonate selon la revendication 1, dans lequel les dihdroxybiphényles représentent 5 à 50 % en mole du phénol divalent comme matière première du composant (A-1).

**3.** Corps moulé en feuille obtenu par moulage de la composition de résine de polycarbonate selon la revendication 1 ou 2, dans lequel le composant (A-2) contient une teneur d'un segment de polyorganosiloxane de 0,1 à 10 % en masse.

**4.** Corps moulé en feuille obtenu par moulage de la composition de résine de polycarbonate selon l'une des revendications 1 à 3, contenant 0,0001 à 2 parties en masse d'un antioxydant à base de phosphore (C) par rapport à 100 parties en masse du composant (A).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005263909 A
- JP SHO5029695 B
- JP HEI3292359 B
- JP HEI4202465 B
- JP HEI881620 B
- JP HEI8302178 B
- JP HEI107897 B